# EUROPEAN PATENT SPECIFICATION

(11) **EP 4 475 272 B1**
(45) Date of publication and mention of the grant of the patent: **27.05.2026**
(21) Application number: 23767215.9
(22) Date of filing: 10.03.2023
(51) Int. Cl.: H01M 10/48, H01M 10/42, H01M 50/251, H01M 50/211, G01K 7/22, G01K 1/14, G01K 13/10

(54) **BATTERY MODULE, BATTERY PACK, AND ENERGY STORAGE SYSTEM**
BATTERIEMODUL, BATTERIEPACK UND ENERGIESPEICHERSYSTEM
MODULE DE BATTERIE, BLOC-BATTERIE ET SYSTÈME DE STOCKAGE D'ÉNERGIE

(30) Priority: 11.03.2022 KR 20220030829
(43) Date of publication of application: 11.12.2024
(73) Proprietor: LG Energy Solution, Ltd., Seoul 07335 (KR)
(72) Inventor: OH, Young-Hoo, Daejeon 34122 (KR); KIM, Seung-Hyun, Daejeon 34122 (KR); OK, Seung-Min, Daejeon 34122 (KR); JO, Sang-Hyun, Daejeon 34122 (KR); CHO, Young-Bum, Daejeon 34122 (KR); HONG, Sung-Goen, Daejeon 34122 (KR)
(74) Representative: Plasseraud IP
(86) International application number: PCT/KR2023/003335
(87) International publication number: WO 2023/172114

(56) References cited:
- CN-A- 113 418 624
- CN-U- 207 441 908
- DE-A1- 102013 021 553
- JP-A- 2008 512 840
- KR-A- 20140 131 716
- KR-A- 20160 134 324
- KR-A- 20170 084 789

## Description

### TECHNICAL FIELD

The present disclosure relates to a battery module, a battery pack, and an energy storage system, and more particularly, to a battery module, a battery pack, and an energy storage system that can be safely and efficiently managed. The present application claims priority to Korean Patent Application No. 10-2022-0030829 filed on March 11, 2022, in the Republic of Korea.

### BACKGROUND ART

Currently commercialized secondary batteries include nickel cadmium batteries, nickel hydride batteries, nickel zinc batteries, and lithium secondary batteries. Among them, lithium secondary batteries are in the spotlight because they have almost no memory effect compared to nickel-based batteries, and thus have advantages of free charge/discharge, very low self-discharge rate, and high energy density.

Recently, secondary batteries have been widely used not only for small devices such as portable electronic devices, but also for medium and large devices such as electric vehicles and energy storage systems (ESSs). For example, when used in an electric vehicle or energy storage system, a cell assembly in which a large number of secondary batteries are connected in series and/or in parallel may be configured to increase energy capacity and output. In addition, a battery pack is formed by connecting a plurality of these cell assemblies.

On the other hand, in order to use the battery pack safely and efficiently, it is necessary to accurately detect the charge/discharge voltage state and temperature of secondary batteries. To this end, the battery pack may include a voltage sensing device for detecting voltage of secondary batteries and a temperature sensor for detecting temperature of secondary batteries. The voltage sensing device and temperature sensors can be installed inside the cell housing along with the secondary batteries.

In addition, the battery pack may further include various electric components for controlling the charging and discharging of the secondary batteries, such as a BMS, a relay, a current sensor, and a fuse. The various electrical components can be housed integrally in the electric component housing separately from the secondary batteries.

There may be several methods for monitoring the temperature of the battery pack. As an example, a method using a thermistor is widely used. In the case of a method using such a thermistor, the thermistor may be provided at a predetermined location inside the battery pack. In addition, a control device connected to the thermistor, such as a battery monitoring system (BMS), may monitor the temperature of the battery cell through a signal transmitted from the thermistor.

As an example, the thermistor may include an element whose resistance value varies according to temperature, such as NTC (Negative Temperature Coefficient). Accordingly, a voltage value input to the control device may vary due to a change in resistance value according to the temperature of the NTC. In addition, the control device may judge the temperature of the battery cell sensed by the thermistor according to the input voltage value using a reference table or the like stored in advance.

Meanwhile, in the case of a conventional battery pack, the temperature of a battery cell is measured by covering the thermistor with a battery pack housing, or the temperature of the battery cell is measured by providing a thermistor to a bus bar frame.

In the case of such a conventional battery pack, it is difficult to measure the temperature of the central portion of the cell assembly in which a plurality of battery cells are stacked, and it is difficult to measure the temperature regardless of the position of the battery cells. In addition, there is a problem in that the battery cell and the thermistor are locally damaged when swelling of the battery cell occurs.

Document DE 10 2013 021553 relates to a high-voltage battery with a plurality of individual battery cells, which are stacked and braced to form one or more cell blocks, and with at least one temperature sensor and signal lines arranged on a component located between the individual battery cells and are at least partially recessed in the component

Document CN 113 418 624 relates to a flexible temperature sensor featuring specific windows for mounting a thermistor and connecting flexible wires of the related art.

### DISCLOSURE

### Technical Problem

The present disclosure is designed to solve the problems of the related art, and therefore the present disclosure is directed to providing a battery module, a battery pack, and an energy storage system that can be safely and efficiently managed.

However, the technical problem to be solved by the present disclosure is not limited to the above-mentioned problems, and other problems not mentioned will be clearly understood by those skilled in the art from the description below.

### Technical Solution

In one aspect of the present disclosure, there is provided a battery module as defined in the appended claims.

In addition, a battery pack and an energy storage system according to an embodiment of the present disclosure are also provided.

### Advantageous Effects

According to the embodiment of the present disclosure, temperature measurement can be freely performed at an arbitrary position of the cell assembly according to the arrangement position of the thermistor plate with respect to the cell assembly and the arrangement position of the thermistor on the thermistor plate.

In addition, according to the embodiment of the present disclosure, the temperature of the central portion of the cell assembly, which is the highest temperature point inside the battery module, can be sensed according to the arrangement position of the thermistor plate with respect to the cell assembly and the arrangement position of the thermistor on the thermistor plate. Accordingly, the battery module can be more safely and efficiently managed.

In addition, through the structure of the thermistor assembly of the present disclosure, damage to the thermistor and battery cells can be prevented even when the thermistor assembly is placed between battery cells, and the substrate equipped with the thermistor is always in close contact with the battery cells, so that the accuracy of battery temperature monitoring can be improved.

In addition, various additional effects may be achieved by various embodiments of the present disclosure. Various effects of the present disclosure will be described in detail in each embodiment, or descriptions of effects that can be easily understood by those skilled in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a diagram exemplarily showing the overall shape of a battery module according to an embodiment of the present disclosure.
FIG. 2 is a diagram showing a thermistor assembly included in the battery module of FIG. 1.
FIG. 3 is an exploded perspective view of the thermistor assembly of FIG. 2.
FIG. 4 is an enlarged view showing a part of the battery module of FIG. 1 in detail.
FIG. 5 is a cross-sectional view in the direction A-A' of FIG. 4.
FIG. 6 is an enlarged view of part B of FIG. 5.
FIG. 7 is a diagram showing a state in which a case body of the battery cell of FIG. 5 and the thermistor plate are in close contact.
FIG. 8 is an enlarged view of part H of FIG. 2.
FIG. 9 is an enlarged view of part L of FIG. 2.
FIG. 10 is a diagram showing a thermistor assembly according to another embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

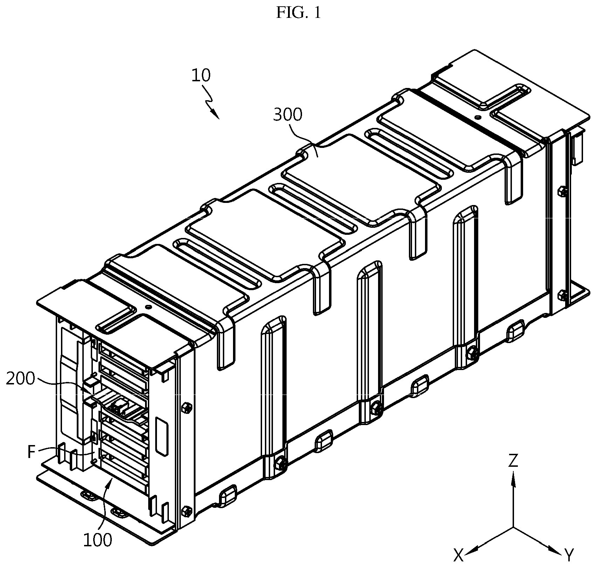

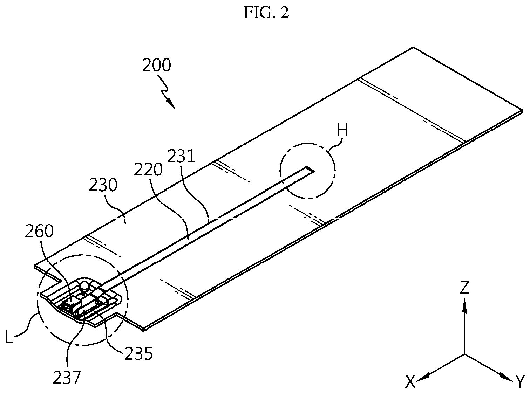

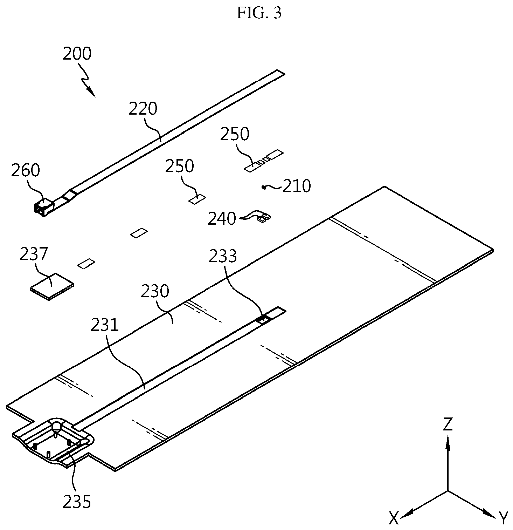

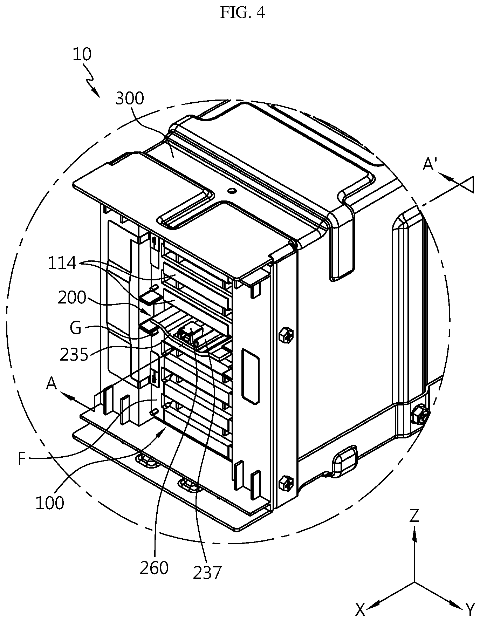

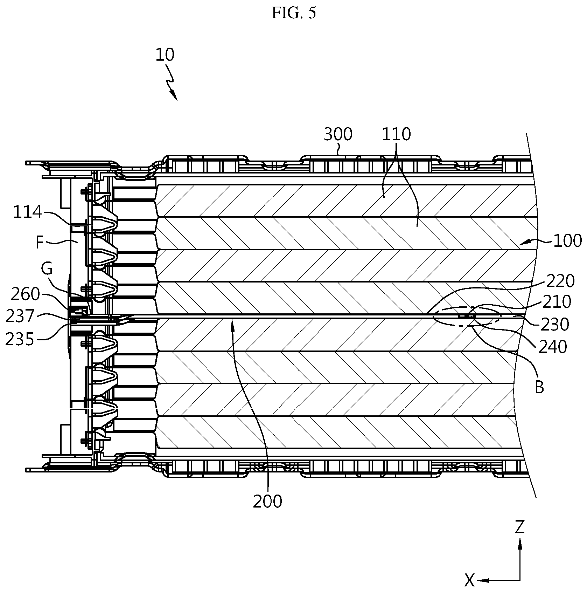

FIG. 1 is a diagram exemplarily showing the overall shape of a battery module 10 according to an embodiment of the present disclosure, FIG. 2 is a diagram showing a thermistor assembly 200 included in the battery module 10 of FIG. 1, FIG. 3 is an exploded perspective view of the thermistor assembly 200 of FIG. 2, FIG. 4 is an enlarged view showing a part of the battery module 10 of FIG. 1 in detail, and FIG. 5 is a cross-sectional view in the direction A-A' of FIG. 4. (In detail, FIG. 5 is a diagram showing the cross-section of the battery module 10 of FIG. 4 along the line A-A' with respect to the XZ plane).

In the embodiment of the present disclosure, the X-axis direction shown in the drawing may mean the longitudinal direction of the battery cell 110 described later, the Y-axis direction may mean the width direction of the battery cell 110 perpendicular to the X-axis direction and the horizontal plane (XY plane), and Z-axis direction may mean the stacking direction of the battery cell 110 perpendicular to both the X-axis direction and the Y-axis direction.

Referring to FIGS. 1 to 5, the battery module 10 may include a cell assembly 100 and a thermistor assembly 200.

The cell assembly 100 may include a plurality of battery cells 110. Here, each battery cell may mean a secondary battery. The battery cell 110 may be provided as a pouch-type battery cell, a cylindrical battery cell, or a prismatic battery cell. As an example, the battery cell 110 may be a pouch-type battery cell.

The battery cells 110 may be arranged to be stacked in plurality in one direction and electrically connected to each other. That is, the plurality of battery cells 110 may be stacked in one direction to form a cell assembly 100.

A bus bar frame F for sensing the voltage of the cell assembly 100 may be coupled to one side and the other side of the cell assembly 100 in the longitudinal direction. The bus bar frame F may support one side and the other side in the longitudinal direction of the cell assembly 100.

The thermistor assembly 200 may be disposed inside the cell assembly 100. In particular, the thermistor assembly 200 may be disposed between the plurality of stacked battery cells 110.

The thermistor assembly 200 may include a thermistor 210, a substrate 220, and a thermistor plate 230.

The thermistor 210 may be configured to sense the temperature of the battery cell 110. As an example, the thermistor 210 may include an element whose resistance value varies according to temperature, and the temperature of the battery cell 110 may be sensed according to a change in the resistance value of the element.

The thermistor 210 may be coupled to one side of the substrate 220 (e.g., a lower portion of the substrate 220). In addition, the substrate 220 may be configured to transmit temperature information of the battery cell 110 sensed by the thermistor 210 to the outside. As an example, the substrate 220 may be a flexible printed circuit board (FPCB).

In the embodiment of the present disclosure, the thermistor 210 may be soldered to one side of the substrate 220. Accordingly, the thermistor 210 can be stably coupled to the substrate 220.

The thermistor plate 230 may be disposed between the plurality of battery cells 110. The thermistor plate 230 may include a guide groove 231 in which the substrate 220 is disposed and the thermistor 210 is accommodated therein. In this way, the thermistor 210 may be accommodated inside the thermistor plate 230 through the guide groove 231.

Accordingly, the thermistor 210 and the cell assembly 100 may not directly contact each other, and in particular, the load of the cell assembly 100 may be prevented from being directly transmitted to the thermistor 210.

In particular, the thermistor plate 230 may be provided between the battery cells 110 in the stacking direction of the battery cells 110 so as to be disposed at an arbitrary position of the cell assembly 100.

The thermistor plate 230 may be inserted between the battery cells 110 in the longitudinal direction of the battery cells 110 at an arbitrary position of the cell assembly 100 in the stacking direction of the battery cells 110. At this time, the thermistor plate 230 may be inserted between the battery cells 110 in the longitudinal direction of the battery cells 110 through a hole G formed in one side of the bus bar frame F.

That is, the thermistor plate 230 may be provided between the battery cells 110 such that the thermistor 210 is located at an arbitrary position of the cell assembly 100 with respect to the stacking direction of the battery cells 110 whose temperature is to be measured.

Also, the thermistor 210 may be provided at an arbitrary position of the cell assembly 100 on the thermistor plate 230.

Accordingly, the thermistor 210 may sense the temperature of the battery cell 110 at an arbitrary position of the cell assembly 100.

In one embodiment, the thermistor plate 230 may be provided between battery cells 110 disposed at the center in the stacking direction of the battery cells 110 so as to be located at the center of the cell assembly 100.

In this case, the thermistor 210 may be provided at a position corresponding to the center of the cell assembly 100 on the thermistor plate 230.

In this case, the thermistor 210 may detect the temperature of the central portion of the cell assembly 100, which is the point with highest temperature within the battery module 10.

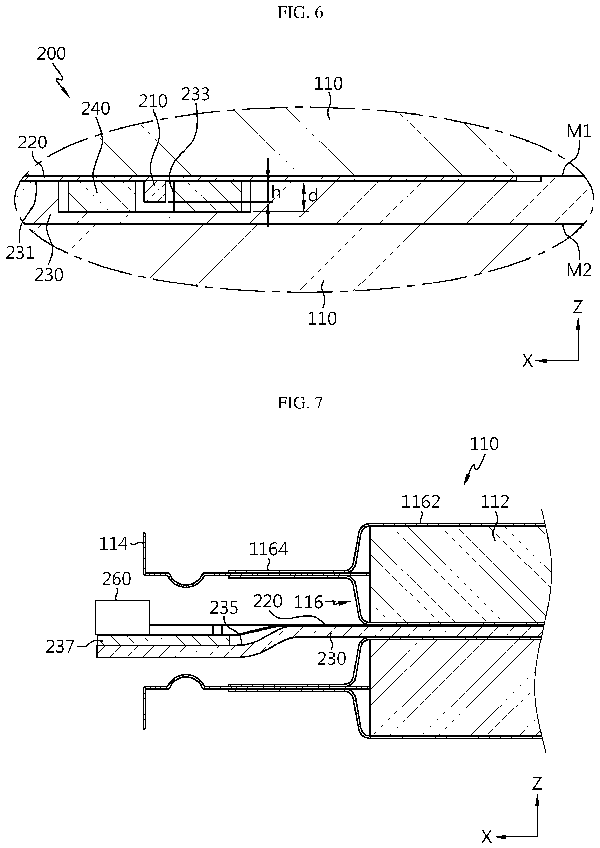

FIG. 6 is an enlarged view of part B of FIG. 5, and FIG. 7 is a diagram showing a state in which a case body 1162 of the battery cell 110 of FIG. 5 and the thermistor plate 230 are in close contact.

Referring to FIGS. 1 to 7, the thermistor plate 230 may be placed in close contact with the battery cells 110 facing each other in the stacking direction of the battery cells 110. As an example, the upper surface M1 and the lower surface M2 of the thermistor plate 230 may come into close contact with the battery cells 110 facing each other.

According to this embodiment of the present disclosure, the thermistor 210 provided inside the thermistor plate 230 can be positioned adjacent to the battery cells 110, so that the temperature of the battery cells 110 can be sensed more easily.

Hereinafter, the aforementioned embodiment will be described in more detail.

Specifically, the plurality of battery cells 110 may include an electrode assembly 112, an electrode lead 114, and a cell case 116, respectively.

The electrode assembly 112 may include a first electrode plate having a first polarity, a second electrode plate having a second polarity, and a separator interposed between the first electrode plate and the second electrode plate. As an example, the first electrode plate may be a positive electrode plate or a negative electrode plate, and the second electrode plate may correspond to an electrode plate having a polarity opposite to that of the first electrode plate.

The electrode lead 114 may be electrically connected to the electrode assembly 112. The electrode lead 114 may be formed on both sides of the longitudinal direction of the battery cell 110. In addition, the electrode lead 114 may be connected to a bus bar (not shown) provided to the bus bar frame F.

The cell case 116 has an accommodation space for accommodating the electrode assembly 112, and may include a case body 1162 and a case terrace 1164. In addition, the electrode lead 114 may protrude a predetermined length out of the cell case 116.

The case body 1162 may have an accommodation space accommodating the electrode assembly 112.

The case terrace 1164 extends from the case body 1162 and may protrude the electrode lead 114 to the outside. The case terrace 1164 may be sealed to seal the accommodation space.

In the embodiment of the present disclosure, the thermistor plate 230 described above may be in close contact with the case bodies 1162 of the battery cells 110 facing each other.

According to this embodiment, the thermistor 210 provided inside the thermistor plate 230 can be positioned adjacent to the case body 1162 in which the electrode assembly 112 is accommodated, so that the temperature of the battery cell 110 can be sensed more easily.

In particular, the thermistor plate 230 may be formed longer than the case body 1162 in the longitudinal direction of the battery cell 110.

According to this embodiment of the present disclosure, in a state where the cell assembly 100 is compressed with respect to the stacking direction of the battery cells 110, a uniform load may be transmitted to the thermistor plate 230 in the stacking direction of the battery cells 110. That is, local stress concentration on the thermistor plate 230 can be prevented. Also, the thermistor 210 may be more stably accommodated in the thermistor plate 230.

Hereinafter, the above-described thermistor assembly 200 will be described in more detail.

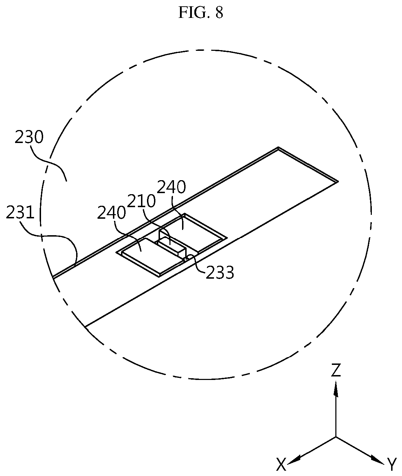

FIG. 8 is an enlarged view of part H of FIG. 2. At this time, the illustration of the substrate 220 described above and the bonding member 250 described later will be omitted in FIG. 8.

Referring to FIGS. 2 to 8, the guide groove 231 may be formed to correspond to the shape of the substrate 220 on the thermistor plate 230.

In addition, the guide groove 231 may be provided to extend along the longitudinal direction of the battery cell 110.

Accordingly, the guide groove 231 may guide stable arrangement of the substrate 220 with respect to the thermistor plate 230.

In particular, the guide groove 231 may be formed on the thermistor plate 230 by indenting to a predetermined depth with respect to the stacking direction of the battery cells 110. Accordingly, in a state where the substrate 220 is disposed on the guide groove 231, the other side of the substrate 220 (e.g., the upper portion of the substrate 220) and the upper end of the guide groove 231 may be located on the same horizontal plane.

According to this embodiment of the present disclosure, stress concentration on the thermistor 210 coupled to one side of the substrate 220 can be prevented when the cell assembly 100 is compressed. Also, according to this embodiment, stress can be distributed over the entire thermistor plate 230, and damage to the battery cell 110 in contact with the thermistor plate 230 can also be prevented.

Referring back to FIGS. 2 to 8, the thermistor plate 230 further includes an accommodation groove 233.

The accommodation groove 233 is formed by indenting to a predetermined depth from the guide groove 231 with respect to the stacking direction of the battery cells 110. At this time, the thermistor 210 is accommodated in the accommodation groove 233.

Accordingly, the thermistor 210 may be more stably positioned inside the thermistor plate 230.

Referring to FIG. 6, the depth (d) of the accommodation groove 233 in the stacking direction of the battery cells 110 may be longer than the length (h) of the thermistor 210 in the stacking direction of the battery cells 110.

In addition, the thermistor 210 may be disposed within the accommodation groove 233 to be spaced apart from an inner lower end of the accommodation groove 233 by a predetermined interval. That is, the thermistor 210 may be spaced apart from the inner lower end of the accommodation groove 233 by a predetermined distance with respect to the stacking direction of the battery cells 110 while being coupled to one side of the substrate 220.

At this time, the distance between the inner lower end of the accommodation groove 233 and the thermistor 210 may be the difference between the depth (d) of the accommodation groove 233 in the stacking direction of the battery cells 110 and the length (h) of the thermistor 210 in the stacking direction of the battery cells 110.

Accordingly, the thermistor 210 may not directly contact the inner lower end of the accommodation groove 233 with respect to the stacking direction of the battery cells 110. Accordingly, transfer of stress to the thermistor 210 during compression of the cell assembly 100 may be minimized.

In the embodiment of the present disclosure, a formation position of the accommodation groove 233 on the thermistor plate 230 may be arbitrarily changed.

That is, the accommodation groove 233 may be formed on the thermistor plate 230 such that the thermistor 210 is located at an arbitrary position of the cell assembly 100 whose temperature is to be measured.

Also, as described above, the thermistor plate 230 may be provided between the battery cells 110 in the stacking direction of the battery cells 110 so as to be disposed at an arbitrary position of the cell assembly 100.

Accordingly, the thermistor 210 may sense the temperature of the battery cell 110 at an arbitrary position of the cell assembly 100.

In one embodiment, as shown in FIGS. 2 and 3, the accommodation groove 233 may be formed on the thermistor plate 230 at a position corresponding to the center of the cell assembly 100. That is, the accommodation groove 233 may be formed on the thermistor plate 230 at a position corresponding to the center of the cell assembly 100 in both the longitudinal and width directions of the battery cell 110.

Also, as described above, the thermistor plate 230 may be provided between the battery cells 110 disposed at the center in the stacking direction of the battery cells 110 so as to be located at the center of the cell assembly 100.

In this case, the thermistor 210 may detect the temperature of the central portion of the cell assembly 100, which is the point with highest temperature within the battery module 10.

Meanwhile, although not shown in detail, edges of the guide groove 231 and the accommodation groove 233 on a horizontal plane may be formed in a streamlined shape. Accordingly, when the cell assembly 100 is compressed, stress may be prevented from being locally concentrated on the thermistor plate 230. In addition, damage to the battery cell 110 in contact with the thermistor plate 230 can also be suppressed.

Referring back to FIGS. 2 to 8, the thermistor assembly 200 may further include an elastic pad 240 and a bonding member 250.

The above-described substrate 220 is configured to come into close contact with the battery cell 110 while being disposed on the guide groove 231. Accordingly, the thermistor 210 coupled to one side of the substrate 220 is also positioned as close to the battery cell 110 as possible, so that temperature measurement accuracy can be improved.

The substrate 220 can come into close contact with the battery cell 110 by an elastic pad 240 described later.

The elastic pad 240 is provided in the accommodation groove 233 and is spaced apart from both sides of the thermistor 210 with respect to the longitudinal direction of the battery cell 110 on a horizontal plane. The elastic pad 240 may be spaced apart from the thermistor 210 to prevent direct contact with the thermistor 210.

Also, the elastic pad 240 may be coupled to one side of the substrate 220 (e.g., a lower portion of the substrate 220) with respect to the stacking direction of the battery cells 110.

In particular, the elastic pad 240 may be configured to elastically support the substrate 220 toward a facing battery cell 110 with respect to the stacking direction of the battery cells 110.

According to this embodiment of the present disclosure, the substrate 220 to which the thermistor 210 is coupled can be always in close contact with the battery cells 110 due to the elastic restoring force of the elastic pad 240.

Hereinafter, the aforementioned embodiment will be described in more detail.

Specifically, the elastic pad 240 may be provided longer than the depth (d) of the accommodation groove 233 in the stacking direction of the battery cells 110. As an example, the length of the elastic pad 240 in the stacking direction of the battery cells 110 may be greater than the depth (d) of the accommodation groove 233 in the stacking direction of the battery cells 110 by about 20%, but is not limited thereto.

In particular, the elastic pad 240 may be coupled to one side of the substrate 220 in the stacking direction of the battery cells 110, and the substrate 220 may be coupled to the guide groove 231 of the thermistor plate 230 in the stacking direction of the battery cells 110.

In this way, since the length of the elastic pad 240 in the stacking direction of the battery cells 110 is greater than the depth (d) of the accommodation groove 233 in the stacking direction of the battery cells 110, in the state of FIGS. 6 and 8, the elastic pad 240 may be in a compressed state with respect to the stacking direction of the battery cells 110 between the substrate 220 and the inner lower end of the accommodation groove 233.

As the elastic pad 240 is compressed in the state of FIGS. 6 and 8, elastic energy may be stored in the elastic pad 240. Accordingly, the elastic pad 240 may elastically support the substrate 220 toward the facing battery cell 110 in the stacking direction of the battery cells 110.

According to this embodiment of the present disclosure, the substrate 220 to which the thermistor 210 is coupled can be always in close contact with the battery cell 110 due to the elastic restoring force of the elastic pad 240. Accordingly, accuracy of temperature measurement by the thermistor 210 and thus accuracy of battery temperature monitoring may be maximized.

The bonding member 250 may couple the substrate 220 to the guide groove 231. Also, the bonding member 250 may couple the elastic pad 240 to the substrate 220. As an example, the bonding member 250 may be a double-sided tape, but is not limited thereto.

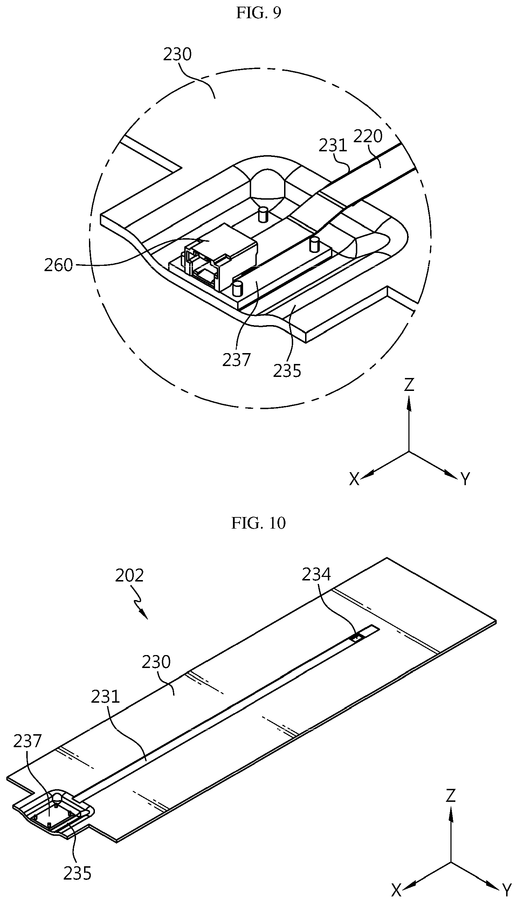

FIG. 9 is an enlarged view of part L of FIG. 2.

Referring to FIGS. 2 to 9, the thermistor assembly 200 may further include a connector 260.

The connector 260 may be provided at one end of the substrate 220 in the longitudinal direction of the battery cell 110. As an example, the connector 260 may be connected to a separate connection line (not shown) and connected to a control device (e.g., BMS) outside the battery module 10. At this time, the substrate 220 may transmit temperature information of the battery cell 110 detected by the thermistor 210 to the external control device through the connector 260.

Referring to FIGS. 2 to 9, the thermistor plate 230 may further include a connector disposing portion 235 and a connector fixing portion 237.

The connector disposing portion 235 may be formed at one end of the thermistor plate 230 in the longitudinal direction of the battery cell 110. Accordingly, the connector 260 can be easily connected to the external control device.

Also, the connector fixing portion 237 may be coupled to the connector disposing portion 235 with respect to the stacking direction of the battery cells 110. The connector 260 may be fixed to the connector fixing portion 237. Accordingly, the connector 260 can be stably fixed to the thermistor plate 230.

In one embodiment, as shown in FIGS. 4 and 5, the connector 260, the connector disposing portion 235 and the connector fixing portion 237 may be located near the aforementioned hole G of the bus bar frame F.

FIG. 10 is a diagram showing a thermistor assembly 202 according to another embodiment of the present disclosure. At this time, the illustration of the thermistor 210, the substrate 220, the elastic pad 240, the bonding member 250, and the connector 260 described above will be omitted in FIG. 10.

Since the thermistor assembly 202 according to this embodiment is similar to the thermistor assembly 200 of the previous embodiment, redundant description of components substantially the same as or similar to those of the previous embodiment will be omitted, and the following will focus on differences from the previous embodiment.

Referring to FIG. 10, the thermistor assembly 202 includes a thermistor plate 230 having a guide groove 231 and an accommodation groove 234.

The accommodation groove 234 may be formed at an arbitrary position on the thermistor plate 230. For example, the accommodation groove 234 may be formed on the thermistor plate 230 at a position that does not correspond to the center of the cell assembly 100.

In this way, the position where the accommodation groove 234 is formed on the thermistor plate 230 can be freely changed. Accordingly, the thermistor 210 may sense the temperature of the battery cell 110 at an arbitrary position of the cell assembly 100.

As described above, according to the embodiment of the present disclosure, temperature measurement can be done freely at an arbitrary position of the cell assembly 100 according to the arrangement position of the thermistor plate 230 with respect to the cell assembly 100 and the arrangement position of the thermistor 210 in the thermistor plate 230.

In addition, according to the embodiment of the present disclosure, the temperature of the central portion of the cell assembly 100, which is a point with highest temperature inside the battery module 10, can be sensed according to the arrangement position of the thermistor plate 230 with respect to the cell assembly 100 and the arrangement position of the thermistor 210 in the thermistor plate 230. Accordingly, the battery module 10 can be more safely and efficiently managed.

In addition, through the structures of the thermistor assemblies 200 and 202 of the present disclosure, damage to the thermistor 210 and the battery cell 110 can be prevented even when the thermistor assemblies 200 and 202 are placed between the battery cells 110, and also accuracy of battery temperature monitoring can be improved by allowing the substrate 220 equipped with the thermistor 210 to be always in close contact with the battery cell 110.

Referring again to FIGS. 1 to 10, the battery module 10 described above may further include a module case 300.

The module case 300 may accommodate the battery module 10 therein. To this end, an accommodation space for accommodating the battery module 10 may be provided in the module case 300.

In addition, at least one battery module 10 according to the present disclosure may be provided as an energy source to configure a battery pack.

Meanwhile, the battery pack according to the present disclosure may further include, in addition to the battery module 10, various devices for controlling the charging and discharging of the cell assembly 100, such as a battery management system (BMS), a current sensor, and a fuse.

In addition, at least one battery pack according to the present disclosure may be provided as an energy source to configure an energy storage system (ESS).

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

On the other hand, in the present disclosure, terms indicating directions such as up, down, left, right, front, and back are used, but these terms are only for convenience of explanation, and it is obvious to those skilled in the art of the present disclosure that the terms may vary depending on the location of the target object or the location of the observer.

### [Explanation of reference signs]

10 : battery module
100 : cell assembly
110 : battery cell
112 : electrode assembly
114 : electrode lead
116 : cell case
1162 : case body
1164 : case terrace
200, 202 : thermistor assembly
210 : thermistor
220 : substrate
230 : thermistor plate
231 : guide groove
233, 234 : accommodation groove
240 : elastic pad
250 : bonding member
260 : connector
300 : module case

## Claims

1. A battery module (10), comprising:
a cell assembly (100) having a plurality of stacked battery cells (110);
a thermistor (210) configured to sense the temperature of the battery cell (110);
a substrate (220) having one side to which the thermistor (210) is coupled and configured to transmit temperature information of the battery cell (110) sensed by the thermistor (210) to the outside; and
a thermistor plate (230) on which the substrate (220) is disposed and a guide groove (231) in which the thermistor (210) is accommodated is formed in the thermistor plate (230), the thermistor plate (230) being disposed between the plurality of battery cells (110);
wherein the thermistor plate (230) further includes an accommodation groove (233) formed by indenting to a predetermined depth from the guide groove (231) with respect to a stacking direction (Z) of the battery cells (110), so that the thermistor (210) is accommodated therein,
wherein the substrate (220) is configured to be in close contact with the battery cell (110) while being placed in the guide groove (231), and
wherein the battery module (10) further comprises an elastic pad (240) provided in the accommodation groove (233), spaced apart from both sides of the thermistor (210), and configured to elastically support the substrate (220) toward a facing battery cell (110) with respect to the stacking direction of the battery cells (110).

2. The battery module according to claim 1, wherein the thermistor plate (230) is provided between battery cells (110) disposed at a center in a stacking direction of the battery cells (110) so as to be located at a center of the cell assembly (100).

3. The battery module according to claim 1, wherein the thermistor plate (230) is placed in close contact with the battery cells (110) facing each other in a stacking direction of the battery cells (110).

4. The battery module according to claim 3, wherein each of the plurality of battery cells (110) includes:
an electrode assembly (112);
an electrode lead (114) electrically connected to the electrode assembly (112); and
a cell case (116) including a case body (1162) having an accommodation space accommodating the electrode assembly (112), and a case terrace (1164) extending from the case body (1162) and protruding the electrode (114) lead to the outside,
wherein the thermistor plate (230) is in close contact with the case bodies (1162) of the facing battery cells (110).

5. The battery module according to claim 4, wherein the thermistor plate (230) is formed longer than the case body (1162) in a longitudinal direction of the battery cell (110).

6. The battery module according to claim 1, wherein the guide groove (231) is formed on the thermistor plate (230) to correspond to the shape of the substrate (220) and extends along a longitudinal direction of the battery cell (110).

7. The battery module according to claim 6, wherein the thermistor plate (230) has an upper surface (M1) and a lower surface (M2) with respect to a stacking direction (Z) of the battery cells (110) and wherein the guide groove (231) is formed on the thermistor plate (230) by indenting to a predetermined depth from the upper surface (M1) with respect to said stacking direction (Z) of the battery cells (110), and
wherein in a state where the substrate (220) is placed in the guide groove (231) along said stacking direction (Z), an upper side of the substrate (220) and an upper end of the guide groove (231) are located on the same horizontal plane.

8. The battery module according to claim 6, wherein the thermistor (210) is disposed at a predetermined distance from an inner lower end of the accommodation groove (233) along said stacking direction (Z) within the accommodation groove (233).

9. The battery module according to claim 1, wherein the accommodation groove (233) is formed on the thermistor plate (230) at a position corresponding to the center of the cell assembly.

10. The battery module according to claim 1, wherein the elastic pad (240) is provided longer than the depth of the accommodation groove (233) in the stacking direction.

11. A battery pack, comprising at least one battery module according to any one of claims 1 to 10.

12. An energy storage system, comprising at least one battery pack according to claim 11.

## Patentansprüche

1. Batteriemodul (10), umfassend:
eine Zellenanordnung (100), welche eine Mehrzahl gestapelter Batteriezellen (110) aufweist;
einen Thermistor (210), welcher dazu eingerichtet ist, die Temperatur der Batteriezelle (110) abzutasten;
ein Substrat (220), welches eine Seite aufweist, mit welcher der Thermistor (210) gekoppelt ist, und welches dazu eingerichtet ist, Temperaturinformationen der Batteriezelle (110), welche durch den Thermistor (210) abgetastet worden sind, nach außen zu übertragen; und
eine Thermistorplatte (230), an welcher das Substrat (220) angeordnet ist, und wobei eine Führungsnut (231), in welcher der Thermistor (210) aufgenommen ist, in der Thermistorplatte (230) gebildet ist, wobei die Thermistorplatte (230) zwischen der Mehrzahl von Batteriezellen (110) angeordnet ist;
wobei die Thermistorplatte (230) ferner eine Aufnahmenut (233) umfasst, welche in Bezug auf eine Stapelrichtung (Z) der Batteriezellen (110) durch Einkerben auf eine vorbestimmte Tiefe von der Führungsnut (231) gebildet ist, so dass der Thermistor (210) darin aufgenommen ist,
wobei das Substrat (220) dazu eingerichtet ist, in engem Kontakt mit der Batteriezelle (110) zu sein, während es in der Führungsnut (231) platziert ist, und
wobei das Batteriemodul (10) ferner eine elastische Unterlage (240) umfasst, welche in der Aufnahmenut (233) bereitgestellt ist, von beiden Seiten des Thermistors (210) beabstandet ist und dazu eingerichtet ist, das Substrat (220) in Bezug auf die Stapelrichtung der Batteriezellen (110) in Richtung einer zugewandten Batteriezelle (110) elastisch zu haltern.

2. Batteriemodul nach Anspruch 1, wobei die Thermistorplatte (230) zwischen den Batteriezellen (110) in einer Stapelrichtung der Batteriezellen (110) an einer Mitte angeordnet ist, um an einer Mitte der Zellenanordnung (100) angeordnet zu sein.

3. Batteriemodul nach Anspruch 1, wobei die Thermistorplatte (230) in engem Kontakt mit den Batteriezellen (110) platziert ist, welche einander in einer Stapelrichtung der Batteriezellen (110) zugewandt sind.

4. Batteriemodul nach Anspruch 3, wobei jede aus der Mehrzahl von Batteriezellen (110) umfasst:
eine Elektrodenanordnung (112);
eine Elektrodenleitung (114), welche elektrisch mit der Elektrodenanordnung (112) verbunden ist; und
ein Zellengehäuse (116), welches einen Gehäusekörper (1162), welcher einen Aufnahmeraum aufweist, welcher die Elektrodenanordnung (112) aufnimmt, und eine Gehäuseabstufung (1164) umfasst, welche sich von dem Gehäusekörper (1162) erstreckt und die Elektrodenleitung (114) nach außen hervorstehen lässt,
wobei die Thermistorplatte (230) in engem Kontakt mit den Gehäusekörpern (1162) der zugewandten Batteriezellen (110) ist.

5. Batteriemodul nach Anspruch 4, wobei die Thermistorplatte (230) in einer longitudinalen Richtung der Batteriezelle (110) länger als der Gehäusekörper (1162) gebildet ist.

6. Batteriemodul nach Anspruch 1, wobei die Führungsnut (231) an der Thermistorplatte (230) gebildet ist, um der Form des Substrats (220) zu entsprechen, und sich entlang einer longitudinalen Richtung der Batteriezelle (110) erstreckt.

7. Batteriemodul nach Anspruch 6, wobei die Thermistorplatte (230) in Bezug auf eine Stapelrichtung (Z) der Batteriezellen (110) eine obere Fläche (M1) und eine untere Fläche (M2) aufweist, und wobei die Führungsnut (231) in Bezug auf die Stapelrichtung (Z) der Batteriezellen (110) durch Einkerben auf eine vorbestimmte Tiefe von der oberen Fläche (M1) an der Thermistorplatte (230) gebildet ist, und
wobei, in einem Zustand, in welchem das Substrat (220) entlang der Stapelrichtung (Z) in der Führungsnut (231) platziert ist, eine obere Seite des Substrats (220) und ein oberes Ende der Führungsnut (231) an der gleichen horizontalen Ebene angeordnet sind.

8. Batteriemodul nach Anspruch 6, wobei der Thermistor (210) mit einem vorbestimmten Abstand von einem inneren unteren Ende der Aufnahmenut (233) entlang der Stapelrichtung (Z) in der Aufnahmenut (233) angeordnet ist.

9. Batteriemodul nach Anspruch 1, wobei die Aufnahmenut (233) an der Thermistorplatte (230) an einer Position gebildet ist, welche der Mitte der Zellenanordnung entspricht.

10. Batteriemodul nach Anspruch 1, wobei die elastische Unterlage (240) in der Stapelrichtung länger als die Tiefe der Aufnahmenut (233) bereitgestellt ist.

11. Batteriepack, umfassend wenigstens ein Batteriemodul nach einem der Ansprüche 1 bis 10.

12. Energiespeichersystem, umfassend wenigstens einen Batteriepack nach Anspruch 11.

## Revendications

1. Module de batterie (10), comprenant :
un ensemble d'éléments (100) ayant une pluralité d'éléments de batterie (110) empilés ;
une thermistance (210) configurée pour détecter la température de l'élément de batterie (110) ;
un substrat (220) ayant un côté auquel la thermistance (210) est couplée et configuré pour transmettre des informations de température de l'élément de batterie (110) détectées par la thermistance (210) vers l'extérieur ; et
une plaque de thermistance (230) sur laquelle le substrat (220) est disposé et une rainure de guidage (231) dans laquelle la thermistance (210) est logée est formée dans la plaque de thermistance (230), la plaque de thermistance (230) étant disposée entre la pluralité d'éléments de batterie (110) ;
dans lequel la plaque de thermistance (230) comporte en outre une rainure de logement (233) formée par indentation jusqu'à une profondeur prédéterminée à partir de la rainure de guidage (231) par rapport à une direction d'empilement (Z) des éléments de batterie (110), de sorte que la thermistance (210) soit logée dans celle-ci,
dans lequel le substrat (220) est configuré pour être en contact rapproché avec l'élément de batterie (110) tout en étant placé dans la rainure de guidage (231), et
dans lequel le module de batterie (10) comprend en outre un plot élastique (240) ménagé dans la rainure de logement (233), espacé par rapport aux deux côtés de la thermistance (210), et configuré pour porter de manière élastique le substrat (220) vers un élément de batterie (110) en regard par rapport à la direction d'empilement des éléments de batterie (110).

2. Module de batterie selon la revendication 1, dans lequel la plaque de thermistance (230) est ménagée entre des éléments de batterie (110) disposés au centre dans une direction d'empilement des éléments de batterie (110) de façon à être située au centre de l'ensemble d'éléments (100).

3. Module de batterie selon la revendication 1, dans lequel la plaque de thermistance (230) est placée en contact rapproché avec les éléments de batterie (110) en regard l'un de l'autre dans une direction d'empilement des éléments de batterie (110).

4. Module de batterie selon la revendication 3, dans lequel chacun de la pluralité d'éléments de batterie (110) comporte :
un ensemble d'électrodes (112) ;
un conducteur d'électrode (114) électriquement connecté à l'ensemble d'électrodes (112) ; et
un boîtier d'élément (116) comportant un corps de boîtier (1162) ayant un espace de logement logeant l'ensemble d'électrodes (112), et une terrasse de boîtier (1164) s'étendant à partir du corps de boîtier (1162) et rendant saillant le conducteur d'électrode (114) vers l'extérieur,
dans lequel la plaque de thermistance (230) est en contact rapproché avec les corps de boîtier (1162) des éléments de batterie (110) en regard.

5. Module de batterie selon la revendication 4, dans lequel la plaque de thermistance (230) est formée en étant plus longue que le corps de boîtier (1162) dans une direction longitudinale de l'élément de batterie (110).

6. Module de batterie selon la revendication 1, dans lequel la rainure de guidage (231) est formée sur la plaque de thermistance (230) pour correspondre à la forme du substrat (220) et s'étend le long d'une direction longitudinale de l'élément de batterie (110).

7. Module de batterie selon la revendication 6, dans lequel la plaque de thermistance (230) possède une surface supérieure (M1) et une surface inférieure (M2) par rapport à une direction d'empilement (Z) des éléments de batterie (110) et dans lequel la rainure de guidage (231) est formée sur la plaque de thermistance (230) par indentation jusqu'à une profondeur prédéterminée à partir de la surface supérieure (M1) par rapport à ladite direction d'empilement (Z) des éléments de batterie (110), et
dans lequel, dans un état où le substrat (220) est placé dans la rainure de guidage (231) le long de ladite direction d'empilement (Z), un côté supérieur du substrat (220) et une extrémité supérieure de la rainure de guidage (231) sont situés sur le même plan horizontal.

8. Module de batterie selon la revendication 6, dans lequel la thermistance (210) est disposée à une distance prédéterminée d'une extrémité inférieure interne de la rainure de logement (233) le long de ladite direction d'empilement (Z) au sein de la rainure de logement (233).

9. Module de batterie selon la revendication 1, dans lequel la rainure de logement (233) est formée sur la plaque de thermistance (230) à une position correspondant au centre de l'ensemble d'éléments.

10. Module de batterie selon la revendication 1, dans lequel le plot élastique (240) est ménagé en étant plus long que la profondeur de la rainure de logement (233) dans la direction d'empilement.

11. Bloc-batterie, comprenant au moins un module de batterie selon l'une quelconque des revendications 1 à 10.

12. Système de stockage d'énergie, comprenant au moins un bloc-batterie selon la revendication 11.
